Europäisches Patentamt

European Patent Office

Office européen des brevets

(11) Publication number: **0 242 223 B1**

(12) **EUROPEAN PATENT SPECIFICATION**

(45) Date of publication of patent specification: **22.07.92**  (51) Int. Cl.⁵: **B60J  1/10**

(21) Application number: **87303407.8**

(22) Date of filing: **16.04.87**

(54) **Moulded panel assembly and fasteners therefor.**

(30) Priority: **16.04.86 US 852416**

(43) Date of publication of application:
**21.10.87 Bulletin  87/43**

(45) Publication of the grant of the patent:
**22.07.92 Bulletin  92/30**

(84) Designated Contracting States:
**DE ES FR GB IT SE**

(56) References cited:
**EP-A- 0 076 924**
**GB-A- 2 115 049**

(73) Proprietor: **DONNELLY CORPORATION**
**414 East Fortieth Street**
**Holland Michigan 49423(US)**

(72) Inventor: **Nieboer, Keith Alden**
**238 Hope Avenue**
**Holland Michigan 49423(US)**
Inventor: **Tucker, Herbert Dale**
**734 Cobblestone Drive**
**Rochester Michigan 48063(US)**

(74) Representative: **Robinson, Anthony John**
**Metcalf et al**
**Kilburn & Strode 30 John Street**
**London, WC1N 2DD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to panel assemblies with moulded peripheral casings or gaskets and fastening means for securing such assemblies in supports. More specifically, the invention relates to a panel assembly such as a composite window assembly for vehicles including fasteners which secure the assembly as a unit in a vehicle after moulding.

In recent years, window assemblies for vehicles have progressed from individually assembled units built up from separate parts on the vehicle to unitary, modular designs which are completely preassembled as a unit and can be applied as a unit from the exterior of a vehicle in a single operation. Such assemblies provide considerable savings in time and cost. In addition, savings in weight, and thus fuel consumption, for the resulting vehicle have been obtained with such assemblies because of the lighter weight resinous plastic materials which can be used to manufacture the units.

Various types of fasteners for securing such modular assemblies to vehicles or other supports have been proposed. Some have included continuous peripheral metal frames as well as individual metal fasteners separately embedded in a moulded casing surrounding the peripheral edge of a window glass and projected through an opening in the vehicle body for securement with fasteners on the interior of the vehicle. Other prior known fasteners have included two parts including some type of anchoring member inserted in the moulded peripheral casing of the window unit and to which an attaching or securing member is glued or otherwise affixed after moulding of the window unit.

Problems have been encountered in using the prior known fasteners. In some cases, the fasteners were not securely retained in the moulded casing. In other situations, the fasteners obstructed proper movement of the moulding material in and around the fastener preventing proper embedding. In yet other instances, the fasteners did not provide adequate attachment to the vehicle body. Greater expense was encountered with the above mentioned two piece fasteners which required the extra step of mounting the attaching structure to the anchor in the moulded casing. Such two part constructions also left doubt as to the integrity of the joint between the attaching member and anchor.

A related problem was encountered in positioning and locating fasteners in mould assemblies during moulding of the window units. Locating the fasteners to extend from the precise position in the window unit for proper registry with openings in the vehicle body is critical. Many difficulties were found in holding the fasteners in position within a mould cavity after the mould sections were closed and during injection of the moulding material. The pressure of the injected material tended to move the fasteners from their preset locations. In some cases, movement of the moulding material was obstructed such that the fasteners were not properly embedded in the moulded casing allowing them to loosen or pull free from the window unit. This resulted in leakage around the window assembly on the vehicle, removal of the window unit by vandals, or other failure in the attachment of the window to the vehicle. Also, keeping the overall size and complexity of a mould assembly to a minimum while providing for proper positioning and location of fasteners for embedding within the moulded casings of the windows was also desired.

The present invention was designed to satisfy the above problems and to provide a strong, secure, properly positionable fastener and resulting panel assemblies including such fasteners for vehicles or other products where moulded panel assemblies are needed.

According to a first aspect of the invention a fastener for securing a panel assembly to a support, the fastener being adapted to be embedded in a moulded portion of the panel assembly, is characterised by a base; resilient means on the base arranged to engage a rigid member in the panel assembly to urge the base into sealing contact with a mould during formation of the moulded portion of the panel assembly, and further adapted to retain the fastener in the moulded portion of the panel assembly; and attachment means on the base adapted to secure the fastener and the panel assembly to the support.

According to a second aspect of the invention a panel assembly adapted to be secured as a unit to a support is characterised by a panel having a peripheral edge; a casing of moulded material moulded around at least a portion of the peripheral edge, a fastener mounted in the casing, and including a base, resilient means on the base, embedded within the casing and arranged to engage a rigid member in the casing to urge the base into sealing contact with a mould during moulding of the casing, and further to retain the fastener in the casing, and attachment means on the base, exposed to the exterior of the casing, arranged to secure the fastener and the assembly to the support.

According to a third aspect of the invention there is provided, in combination with a fastener as defined in the first aspect of the invention, a mould assembly characterised by a pair of cooperating mould sections having facing surfaces and defining a mould cavity; at least one of the mould sections including support means arranged to receive and support a sheet of material therein such that at least a portion of the periphery of the sheet projects into the mould cavity; the other of the mould sections including means adapted to press the sheet against the support means; insertion means adapted for inserting and filling the mould cavity with a flowable moulding material to form a moulded gasket or casing around the portion of the sheet material periphery; and means adapted to hold the fastener within the cavity such that the resilient means of the fastener will be moulded into said moulded gasket portion or casing during moulding.

According to a fourth aspect of the invention a mould assembly is characterised by a pair of cooperating mould sections having facing surfaces and defining a mould cavity; at least one of the mould sections including support means arranged to receive and support a sheet of material therein such that at least a portion of the periphery of the sheet projects into the mould cavity; the other of the mould sections including means adapted to press the sheet against the support means; insertion means adapted for inserting and filling the mould cavity with a flowable moulding material to form a gasket or casing around the said portion of the sheet material periphery; and a pocket, adapted to hold a separate part within the cavity, such that at least a first portion of the separate part engages the sheet of material forming a rigid member within the mould cavity to hold the separate part within the cavity, and such that the said first portion of the separate part is so positioned as to be moulded into the gasket or casing during moulding.

According to a fifth aspect of the invention a method of moulding a gasket or casing around a peripheral portion of a sheet material is characterised by providing a mould assembly having cooperating mould sections adapted to support the sheet of material therein with a mould cavity into which the periphery of the sheet projects; inserting a separate part into a recess in one of the mould sections prior to closing the mould sections such that the said part is held in the recess with a portion thereof extending into the cavity; closing the mould sections to engage a portion of the separate part with the sheet material to urge the separate part into sealing contact with a part of the recess; introducing into the mould cavity a flowable moulding material to form the gasket or casing around the sheet periphery and to embed a first portion of the separate part in the gasket or casing with a second portion thereof extending out of the gasket or casing, the urging of the separate part into sealing contact reducing or preventing flow of moulding material around the second portion; and then, opening the mould sections and removing the sheet material with the gasket or casing thereon.

The following are some optional features of the various aspects of the invention:

A The base includes opposite lateral edges, the retaining means being offset toward one of the lateral edges and the pair of flanges being offset toward the other of the lateral edges. This has the advantage that flow of moulding material along the length of the base past the flanges and retaining means during moulding of the panel assembly is promoted.

B The base may include a surface adapted to sealingly engage a mould portion during formation of the panel assembly; the projecting means being spaced toward said resilient means from said surface of the base.

C The fastener may be moulded in one piece from a polymeric material such as acetal resin.

D The resilient member may be a cantilevered flange which curves outwardly away from the base to a free end and tapers in thickness from the base to the free end. This acts to promote flexing when urged against the rigid member in the panel assembly during moulding thereof.

E The cantilevered flanges may be spaced apart on the base, and may curve either away from one another or towards one another.

F The resilient member may be tubular, the axis of the tubular member extending generally parallel to the base. Desirably, the tubular member is generally oval in cross-section, the larger internal dimension of said oval tubular member extending generally parallel to the base.

G Desirably, the oval tubular member includes opposing sidewalls and a bottom wall spaced from said base, said opposing sidewalls being thinner than said bottom wall. The end surfaces of the tubular member may be sloped inwardly toward one another.

H The base may extend outwardly around the attachment means and include a surface adjacent the attachment means adapted to sealingly engage a mould portion during formation of the panel assembly to prevent the flow of moulding material around said attachment means.

I The attachment means of the fastener may include a post for receiving a fastener thereon. Desirably, the attachment means include means for hingedly securing the fastener and any panel assembly to which it is secured to a support. In addition, the attachment means may include an aperture for receiving a fastening member therein.

J In the aspects in which the invention comprises an assembly, the base may extend around the attachment means; the second side surface of the base having portions exposed at a surface of the casing; the exposed portions of the second side surface adapted to sealingly engage a mould portion during moulding of the casing to prevent the flow of moulding material around the attachment means.

K In the aspect in which the invention comprises a combination, the means for holding the fastener within the cavity may include suspension means for suspending the fastener within the cavity.

L Preferably, the pocket means includes a pocket extending into at least one of the mould sections and opening into the cavity for receiving a second portion of the separate part.

M The pocket means may further include a recess surrounding the pocket and opening into the cavity, the recess having a bottom surface adapted to engage a third portion of the separate part whereby the mould sections are closed, the first portion of the separate part will engage the rigid member within the mould cavity and the third portion of the separate part will tightly engage the recess bottom to prevent the flow of moulding material into the pocket such that the second portion of the portion of the separate part will extend out of the gasket or casing.

N The recess is wider than the pocket.

Accordingly, the present invention provides a panel assembly such as a moulded composite window unit for vehicles adapted to be secured as a unit to a support such as a vehicle body. Each panel assembly may include a panel having a peripheral edge and a casing of moulded material such as polyvinyl chloride or reaction injected moulded polyurethane extending around at least a portion of the peripheral edge of the panel. The assembly may also include fasteners which are securely retained for mounting the assembly to a support, allow proper movement of moulding material around the fasteners during moulding, and enable proper positioning and retention of the fasteners in the mould cavity during moulding of the panel assemblies.

In one example, the invention provides a fastener for securing a panel assembly such as a vehicle window assembly or the like to a support, the fastener adapted for embedding in a moulded portion of the panel assembly. The fastener includes a base, resilient means on the base for engaging a rigid member in the panel assembly to urge the base into sealing contact with a mould portion during formation of the moulded portion of the assembly and for retaining the fastener in that moulded portion. Attachment means on the base are also provided for securing the fastener and panel assembly to a support.

Preferably, the fastener is moulded in one piece from a polymeric material such as acetal resin and includes retaining means on the base separate from the resilient means for aiding the retention of the fastener in the moulded portion of the assembly and projecting means extending from the base for aiding the location and positioning of the fastener in a mould section during moulding and for aiding in the retention of the fastener in the moulded portion after manufacture. The resilient and retaining means may include various shapes of curved or other flanges which may be tapered for flexing. Alternately, a tubular member extends generally parallel to the base and includes flexible sidewalls which provide resiliency.

The resilient means are pressed against a rigid member, such as the panel or window glass itself, in the moulded casing when the mould sections are closed during manufacture. Such pressure forces the base against a surface of the mould to prevent moulding material from covering the attaching means. The result is a fastener which is securely embedded in the moulded casing and having attaching means which extend out of the moulded casing for attachment to the vehicle or other support.

In other aspects of the invention, various types of attaching means may be included on the fastener such as a resilient securing member, an upstanding post, an aperture for receiving a fastening member, or means for hingedly securing the fastener and panel assembly to a support. The resilient member is received in a pocket in mould to hold the fastener in proper position during moulding.

The present invention therefore provides significant advantages over prior known fasteners for use in panel assemblies and over prior known panel assemblies themselves. First, the fasteners provide for proper embedding and secure retention in moulded casing portions of panel assemblies such as vehicle windows. The resilient means and retaining means on the base of the fasteners allow proper movement of the moulding material therearound for such embedding. In addition, the one-piece fasteners allow secure attachment of the fastener and panel assembly without the need for separate attachment of securing structures by adhesives or the like. The fasteners also allow proper engagement with the mould assemblies as biased by the resilient means to prevent flow of moulding material around the attaching means. In addition, the attaching means and resilient means of the fasteners allow proper positioning, location and retention of the fasteners in the mould cavity during injection of moulding material and to allow proper flow of the moulding material. Moulds may be easily adapted to receive the fasteners of the present invention with minimal preparation or modification while the fasteners themselves remain precisely positioned and include structure to prevent shifting or movement in position within the mould cavities during injection of the mould material therearound.

The invention may be carried into practice in a number of ways and several embodiments of a fastener of the present invention and modifications thereof, and several embodiments of a panel assembly of the present invention will now be descirbed, by way of example, with reference to the drawings, in which

Figure 1 is a perspective view of the exterior side of a panel assembly embodying the invention incorporating a first embodiment of the fasteners of the present invention, the panel assembly being of the type forming a window unit for vehicles;

Figure 2 is a perspective view of the interior side of the panel assembly of figure 1;

Figure 3 is a perspective view of a first embodiment of the fastener of the present invention;

Figure 4 is a sectional view of the panel assembly of figures 1 and 2 showing one of the fasteners and taken along line IV-IV of figure 2;

Figure 5 is a bottom plan view of the fastener of figure 3;

Figure 6 is a side sectional view of the panel assembly of figures 1 and 2 showing one of the fasteners taken at a right angle to the view of figure 4 along line VI-VI of figure 2;

Figure 7 is a perspective view of a second embodiment of the fastener of the present invention;

Figure 8 is a side elevation of the fastener of figure 7;

Figure 9 is a bottom plan view of the fastener of figures 7 and 8;

Figure 10 is a sectional view of a panel assembly incorporating the fastener of figures 7-9 showing the fastener from the end;

Figure 11 is a perspective view of a third embodiment of the fastener of the present invention;

Figure 12 is a side elevation of the fastener of figure 11;

Figure 13 is a bottom plan view of the fastener of figures 11 and 12;

Figure 14 is a sectional view of a panel assembly incorporating the fastener of figures 11-13 showing the fastener from the end;

Figure 15 is a sectional view of a panel assembly incorporating a modification of the third embodiment of the fastener of the present invention,

Figure 16 is a sectional view of a panel assembly incorporating a second modification of the third embodiment of the fastener of the present invention;

Figure 17 is a sectional view of a panel assembly incorporating a third modification of the third embodiment of the fastener of the present invention;

Figure 18 is a sectional view of a panel assembly incorporating a fourth modification of the third embodiment of the fastener of the present invention;

Figure 19 is a broken side view of a portion of the fastener in figure 18;

Figure 20 is a sectional view of a panel assembly incorporating a fifth modification of the third embodiment of the fastener of the present invention;

Figure 21 is a sectional view of a panel assembly incorporating a sixth modification of the third embodiment of the fastener of the present invention;

Figure 22 is a perspective view of a fourth embodiment of the fastener of the present invention;

Figure 23 is a side elevation of the fastener of figure 22;

Figure 24 is a sectional view of a panel assembly incorporating the fastener of figures 22 and 23 showing the fastener in section;

Figure 25 is an enlarged sectional view of a mould assembly showing the positioning of the first embodiment of the fastener immeditely prior to injection of moulding material into the mould cavity; and

Figure 26 is a sectional view of the mould assembly of figure 25 taken at a right angle to figure 25;

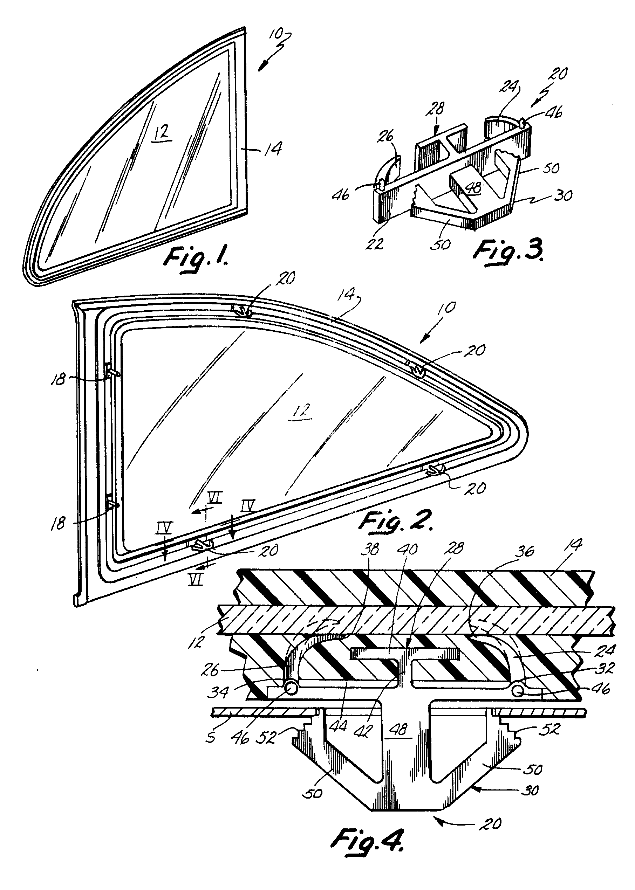

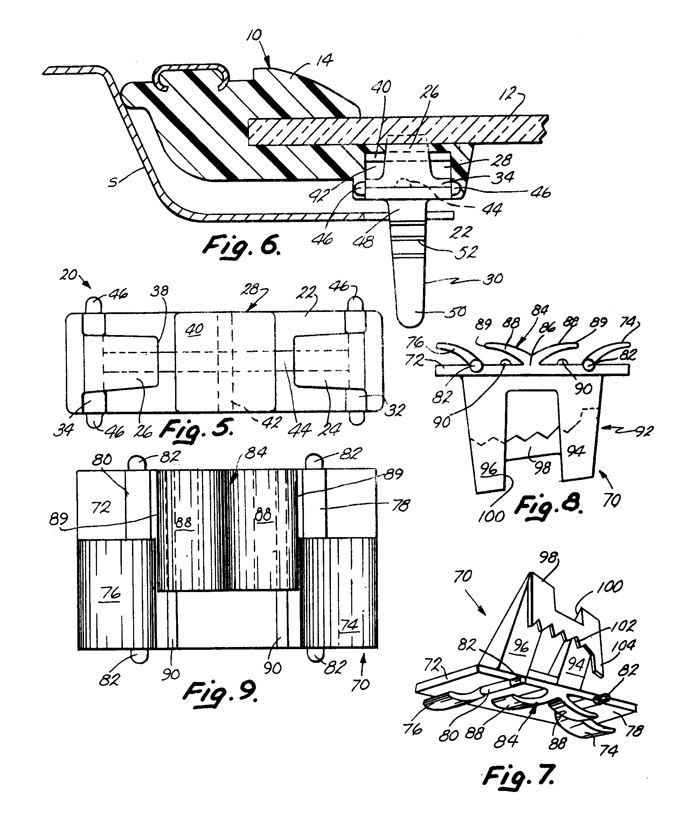

Referring now to the drawings in greater detail, figures 1 and 2 illustrate one form of the panel assembly 10 of the present invention incorporating a first embodiment 20 of the fastener of the present invention. The panel assembly 10 is a modular window unit adapted for use in a vehicle and includes a transparent panel 12 of sheet glass which may be planar or curved. A moulded peripheral gasket or casing 14 extends around the entire peripheral edge of the panel 12. The specific window assembly 10 shown in figures 1 and 2 is adapted for use as a rear quarter window of a vehicle and is completely premanufactured prior to installation on a vehicle. It is assembled in one piece as a unit from the exterior of the vehicle over an opening in the body sheet metal of the vehicle. In this case, the moulded casing 14, which may be formed either from polyvinyl chloride or reaction injected moulded polyurethane, includes various ribs extending along the front and rear surfaces. Such ribs are adapted to conform the casing to the shape of the body sheet metal to seal the assembly against the vehicle body to prevent entry of water, dirt and other contaminants between the window and the body. The moulded casing 14 is resilient and somewhat flexible and may be pressed against the body sheet metal to form an effective seal as shown in figures 6, 10 and 14 also allows embedding and incorporation of the fasteners 20 during moulding as described below. The glass used in the assembly 10 is preferably laminated or tempered safety glass and may be tinted or clear as desired. Of course, the shape of the panel or glass sheet may be cut as desired with the peripheral moulded casing 14 formed to such shape and extending along at least portions of the peripheral edge although extension of the casing around the entire perihery is not necessarily required in all instances.

The window assembly 10 is designed for permanent installation to provide a window which cannot be raised or lowered. Of course, other forms of the invention may be hinged to the vehicle body for opening or may be incorporated in other structures to allow raising and lowering. As mentioned above, the assembly provides an improvement over the prior known piecemeal assembly methods used for installation of permanently positioned or other windows in vehicles and other structures and allows installation of the window assembly as a unit from the exterior of the automobile or other vehicle with only final securement of a few nuts or other securing means being necessary from the interior to complete the installation.

The fasteners 20 are spaced along the inside surface of the moulded gasket 14 such that they will be in registry with openings in the vehicle body sheet metal to allow insertion of the window unit completely from the exterior. As described below, the fasteners 20 resiliently engage the openings in the sheet metal, are compressed to move through such openings and thereafter expand to engage an edge of the openings to retain the assembly securely in place over the vehicle body opening. The fasteners 20 may be incorporated into the moulded casing 14 along with other types of fasteners such as conventionally known headed studs 18 (figure 2) which may be secured directly to the window glass 12 or embedded in the moulded casing using conventionally known methods not forming a part of the present invention.

Referring now to figures 3-6, the fastener 20 includes a rectangular, planar base 22. Resilient, flexible flanges 24, 26 extend outwardly from one side of the base at spaced positions adjacent either end with a T-shaped retaining member 28 also extending from the base 22 intermediate the flanges 24, 26. An attaching member 30 extends outwardly from the opposite side of the base 22. The entire fastener 20 is preferably moulded in one piece front a resilient, flexible polymeric material such as acetal resin which has excellent memory and resiliency characteristics, is not water absorbant, and meets the requirements for vehicle manufacturers with respect to resisting environmental conditions such as corrosion and the like.

The resilient, flexible flanges 24, 26 curve toward one another from rounded ribs 32, 34 (figure 4) which extend laterally across the base 22. The flanges 24, 26 narrow toward their free ends 36, 38 such that the flanges can flex under pressure within a mould from the position shown in dotted lines to the position shown in solid lines in figure 4. When placed within a mould assembly during manufacture of a window assembly 10, the flanges 24, 26 engage a rigid member within the casing (such as the glass panel 12) to bias and force the base 22 outwardly away from the glass sheet 12 and against a portion of the mould assemby. This forms a seal between the base and the mould assembly to prevent mould material from flowing in and around the attaching member 30. Such sealing contact prevents the attaching member 30 from being embedded within the moulding material and allows it to extend out of the moulded casing for securing purposes. As shown in figures 5 and 6, the resilient flanges 24, 26 have a width substantially less than the width of both the base 22 and the T-shaped retaining member 28. Such lesser width reduces pressure of the moulding material against the fastener which would tend to move the fastener from its proper position in the mould during manufacturing. Such width also aids the flow of mould material along the length of the fastener to allow proper embedding in the moulding material for secure retention of the fastener.

As shown in figures 4-6, the T-shaped retaining member 28 includes a substantially square, planar retaining flange 40 extending at right angles to a support flange 42 which joins the flange 40 to the base 22 at the centre of the base. The flanges 40, 42 extend the full lateral width of the base 22 to provide a maximum, retention area. The ends of the flange 40 extend outwardly from the flange 42 substantially parallel to the base 22 but are spaced from the base by the length of flange 42. This provides an area for filling with mould material while the parallel extension provides maximum retaining strength when embedded in the moulding material. The base 22 is further reinforced by a longitudinally extending rib 44 which extends between the insides of the flanges 24, 26 and the inside surfaces of the flange 42 as shown in figures 4-6. The overall height of the retaining member 28 is less than the height of the flanges 24, 26, either in their free state or when compressed by the mould assembly as shown in figured 4 and 6. Hence, the retaining member 28 does not engage or touch the glass 12 but is merely firmly embedded within the moulding material to help retain the fastener in place in the assembly 10.

Location and positioning of the base 22 and the entire fastener 20 in a mould and retention of the fastener within the moulding material are aided by extending pins 46 which project outwardly from the lateral side edges of the base 22 at four spaced positions aligned with the ribs 32, 34 as shown in figures 3-6. The cylindrical pins 46 are spaced below the top surface of the base 22 from which the attaching member 30 extends. This allows the moulding material to flow around the pins and enclose and embed them as shown in figure 6 to aid the retention of the fastener within the moulded casing 14 As shown in figures 3, 5 and 6, the ends of pins 46 are rounded and are adapted to be engaged by surfaces of the mould assembly properly and precisely to locate and position the fastener and base 22 during moulding.

The attaching member 30 includes an upstanding post or support 48 and a pair of flexible, resilient attaching arms 50 extending from opposite sides of the post 48 generally along the longitudinal centreline of the base 22. The arms 50 thus extend longitudinally of the base 22 and downwardly toward the base but outwardly away from the post 48. The post 48 is generally rectangular in section although it tapes toward its outer end from the area at which it contacts the base 22 as is shown in figure 6. Th arms 50 taper slightly outwardly from their areas of connection to the post 48 and terminate in a series of serrations or shoulders 52 extending across the free end of each arm as is best seen in figures 3 and 4. The serrations 52 engage the edges of an aperture or recess formed in the vehicle body sheet metal S (figure 4) of a vehicle when the window assembly 10 is installed. The serrations 52 prevent withdrawal of the window unit from the vehicle body unless the arms 50 are purposely flexed or compressed toward the post 48 such that they will fit through the opening in the sheet metal S. However, when the window assembly 10 is inserted through such openings, the angled extension of the arms 50 toward the window assembly automaticaly cams and flexes the arms inwardly towards the post 48 and the base 22 as the window assembly is forced toward the body sheet metal S. After passing through the sheet metal opening, the natural resiliency of the fastener 20 causes the arms 50 to snap back outwardly to their free state position. This allows the serrations 52 to engage the edge of the aperture inthe sheet metal to retain the unit in place. The unit is thus held with the moulded casing 14 in tight engagement with the contoured sheet metal S.

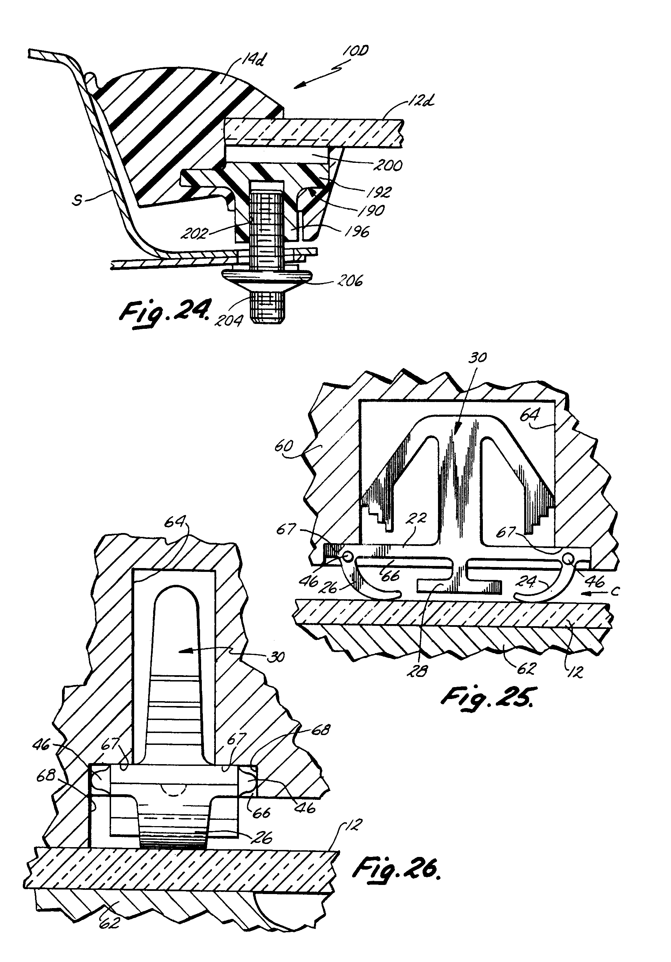

Referring now to figures 25 and 26, the fastener 20 is shown prepositioned in a mould assembly prior to closing that assembly for the formation of the moulded casing 14 around the glass 12. A typical mould assembly includes a pair of mould sections 60, 62 with a pocket or slot for receiving the fastener 20 prior to loosing of the moulds. The pocket or slot includes a recess or pocket 64 which is slightly wider than the width of the attaching member 30 and is slightly deeper than the overall height of the member 30. A wider and longer but shallower stepped portion 66 of the pocket or slot for receiving the fastener 20 communicates with the pocket 64 to receive the base 22 and the locating, positioning pins 46. The surface of the base 22 from which the attaching member 30 extends contacts a bottom surface 67 of the pocket portion 66 while the pins 46 engage the sides 68 of that pocket portion. The flexible, resilient arms 50 are slightly compressed by the length of the pocket portion 64 which is slightly less than the overall dimension of the attaching member 30 measured across the arms 50 at their widest point in their free state. The resiliency of the arms 50 holds the fastener within the pocket while the base 22 is securely and properly positioned by the locating and positioning pins 46 as described above.

After the fasteners 26 are positioned within one mould section, the mould sections are closed to from a mould cavity C (25) with the opposite mould section 62 pressing the glass 12 against the resilient, flexible flanges 24, 26. Such pressure when the mould sections are closed forces the base 22 tightly into sealing contact with the surfaces 67 of the mould pocket 66. As the moulded sections are completely closed, the flanges 24, 26 are compressed since the overall depth of the cavity C including the glass 12 is less then the combined thickness of the base 22, the flanges 24, 26 and the glass 12 when in contact with one another. However, if the depth of the pocket 64 is too small, the height of the attaching member 30 will prevent the base 22 fom sealingly engaging the surface 67 or causing over compression and failure of the flanges 24, 26. The compression of the flanges 24, 26 flexes them inwardy toward one another and retaining the member 28 as shown in figures 4, 6 and 25. The natural resiliency of the fastener 20 biases and urges the base 22 tightly against the surfaces 67 of the pocket 66 to prevent moulding material injected into the cavity C from flowing around the base into the pocket 64 which would otherwise embed and envelope the attaching member 30. Preferably, the biasing force against the surface 67 is about 25-30 pounds (111 to 133N). Such force depends on the material shape and size of the flanges 24, 26. Too little pressure from incorrectly sized flanges will allow leakage of mould material around the base 22. Too great a pressure could prevent mould closure, or break the glass 12 or the fastener itself. Hence, with proper pressure, the embedding of the attaching member 30 is prevented such that it extends out of the moulded casing 14 as manufactured. The pressure of the moulding material flowing into cavity C also helps force the base 22 tightly against surfaces 67. The moulding material embeds the pins 46, the flanges 24, 26 and the retaining member 28 to securely retain the fastener in the window assemby while leaving the top of the base 22 flush with and exposed at the exterior surface of the mould material.

Of course, the fastener 20 may press against another rigid member within the assembly when the mould is closed other than the glass 12 to press the base 22 tightly against a mould surface. Other rigid members may include sheet metal parts or other members.

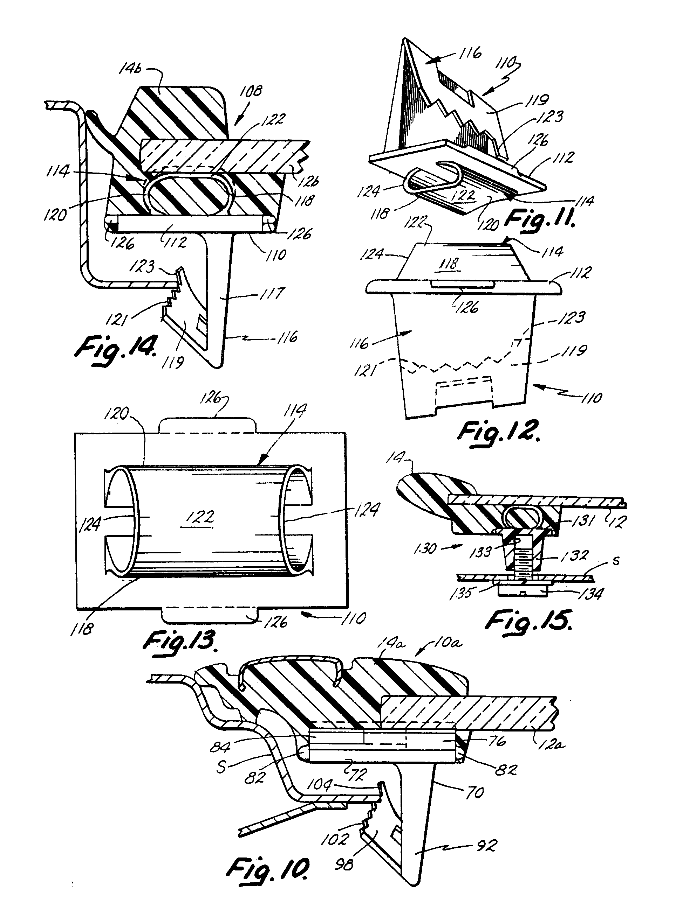

Referring now to figures 7-10, a second embodiment 70 of the fastener is illustrated. The fastener 70 is also designed to be incorporated by moulding into a window unit or other panel assembly 10a as shown in figure 10 such that it extends from a moulded casing 14a for attachment purposes. The fastener 70 includes a different combination of resilient flanges and a retaining member as well as a different type of attaching member.

As is best seen in figures 7-9 the fastener 70 is preferably moulded in one piece from acetal resin and includes a base 72 which is planar and rectangular. Resilient, flexible flanges 74, 76 curve outwardly away from the base toward the ends of the base opposite to the direction of curvature of the flanges 24, 26 in the fastener 20 and become thinner or narrow toward their free ends to allow them to flex under pressure As in the fastener 20, the flanges 74, 76 extend from protruding ribs 78, 80 extending laterally across the bottom surface of the base 72. Locating and positioning pins 82 are reduced diameter extensions of the ribs 78, 80 at the lateral edges of the base 72.

At the centre of the base 72, intermediate the flanges 74, 76, is a gull-wing shaped retaining member 84 joined to the bottom surface of the base 72 at 86 and having outwardly curved retaining flanges 88 extending therefrom. The flanges 88 become thinner or narrow toward their free ends 89 to allow those flanges to flex like the flanges 74, 76 and include portions at the ends thereof which are generally parallel to the extent of the base 72 but are spaced from the base to allow proper embedding and retention in the moulded casing of a window unit. Strengthening ribs 90 extend laterally across the base 72 beneath the flanges 88 as shown in figures 8 and 9.

On the opposite side of the base 72 from the flanges 74, 76 and the retaining member 84, is an upstanding attaching member 92 including a generaly U-shaped flange having outwardly extending flange portions 94, 96 tapering to free ends at which a resilient, flexible securing flange 98 is joined as shown in figures 7, 8 and 10. The flange portions 94, 96 taper to a thinner section at their outer ends while the flanges 98 has a uniform, thin thickness. An opening 100 extends between the flange portions 94, 96 into a portion of the flange 98 which includes a series of serrations 102 adapted to engage and secure the flange to the edge of the body sheet metal S of a vehicle as shown in figure 10. One side of the flange 98 includes an elongated serration or tab 104 which engages the end surface of the sheet metal as shown in figure 10. Engagement of the sheet metal edge may be by any of the serrations 102 of the flange 98. The tab 104 is sufficiently long such that it will engage the end surface of sheet metal S but will not move past the sheet metal edge. Thus, the fastener flange 98 is not positioned completely on one side of the sheet metal. This prevents the flange from being bent backwards should the assembly 70 be pulled outwardly and maintains greater holding strength for the fastener.

As will be understood from figure 9, the retaining member 84 is offset from the centreline of the base 72 such that one edge is aligned with one lateral edge of the base. The resilient flanges 74, 76 are offset in the opposite direction toward the oppostie lateral edge of the base 72 such that their edges are in alignement with the opposite edge of the base. The flanges 74, 76 thus are aligned with the glass 12a when positioned in a window unit (figure 10). Such offsetting also facilitates flow of the moulding material along the base from end to end and facilitates embedding of these members within the moulding material for secure retention in the window unit.

Moulding of the fastener 70 into a window unit 10a in figure 10 is accomplished substantially in the same way as for the fastener 20 using mould sections with a fastener receiving pocket of stepped type of similar configuration. The flanges 74, 76 are adapted to be compressed against the glass pane 12a or other rigid member to urge the top surface of the base 72 against surfaces of the mould section around the attaching member 92 to prevent flow of moulding material as described above in connection with the fastener 20 in figures 25 and 26. The overall height of the gull-winged retaining member 84 is the same as the free or compressed heights of the flanges 74, 76 to assure contact with the glass 12a by all those members when the mould sections are closed. The flange 98 is sufficiently flexible to flex inwardly toward the flange portions 94, 96 to allow the attaching member 92 to be pressed into a mould pocket such as that at 64 in figures 25 and 26 to hold the fastener in the mould cavity. In the completed assembly, the serrations 102 of the flange 98 can move past the edge of the body sheet metal S. One portion of the flange 98 expands to its normal, free state with the tab 104 engaging the edge of the body sheet metal and the serrations 102 engaging the back surface of the sheet metal. The flange 98 is thus slightly flexed while retaining the fastener and the panel assembly securely in place a shown in figure 10.

Similarly, the pins 82 locate and position the base 72 in a stepped pocket portion the mould assembly such as that at 66 in figures 25 and 26 to prevent movement of the fastener during injection of the moulding material into the mould cavity. The pins 82 also aid retention of the fastener in the moulded casing 14a after manufacture since they are spaced below the top surface of the base 72 from which the attaching member 92 extends and are enclosed in the casing.

In figure 11-14, a third embodiment 110 of the fastener is illustrated. A fastener 110 is preferably moulded in one piece from acetal resin and includes a rectangular, planar base 112 with a resilient, flexible tubular retaining member 114 formed on one side of the base. An upstanding attaching member 116 extends from the opposite side of the base. The tubular member 114 combines the functions of the resilient flanges in the fasteners 20 and 70 with the function of the retaining members 28, 84 in those fasteners. Thus, the resilient member 114 not only flexes to the force base 112 against a mould section pocket to present flow of moulding material around thee attaching member 116, but also retains the fastener 110 embedded within the moulded casing portion 14b of a modular window unit 10b as shown in figure 14 and described below.

The tubular member 114 is oval in section, has an axes generally parallel to the base, and includes sidewalls 118, 120 and a bottom wall 122. The largest dimension of the tube is generally parallel to the base. The sidewalls 118, 120 are thinner in section than the thickness of the bottom wall 122 to facilitate flexing of the tubular member into a flatter, more oval shape than its normal free state when engaged by the mould sections and pressed against glass sheet 12b during moulding of a window assembly (see figure 14). The end surfaces 124 of the tubular member 114 are slanted inwardly toward one another to facilitate flow of moulding material through the tubular member and around its ends.

The base 112 of the fastener 110 also includes laterally extending locating and positioning lugs 126 which extend about one-third of the distance along opposing side edges of the base. The elongated lugs 126 perform the same function of positioning the base 112 in a mould assembly pocket during manufacturing as do the pins 46 in figure 26 but are enveloped and embedded within the moulding material after manufacture as shown in figure 14 to help retain the fastener in place in the assembly.

The attaching member 116 is substantially similar to the attaching member 92 in the embodiment 70 of the fastener except that it does not include a deep opening 100 in the upstanding support flange 117 thereof as in the embodiment 70. It does include a thin, flexible securing flange 119 with serrations 121 and a tab 123, however, similar in function to the flange 98 with the serrations 102 and the tab 104 in the embodiment 70. Accordingly, when positioned within a mould cavity as described in connection with figures 25 and 26, the fastener 110 is embedded in the same manner with the tubular member 114 compressed by the mould sections against glass 12b or another rigid member in the assembly to urge the base 112 against a portion of the fastener receiving pocket in one mould section. This prevents flow of moulding material around the attaching member 116 such that it will extend from the inside surface of the moulded casing 14b as shown in figure 14 for engagement with the vehicle body sheet metal S to retain the fastener and window assembly in place on the vehicle. The top surface of the base 112 is again flush with the surface of moulded casing 14b with the lugs 126 and the tubular member 114 firmly surrounded and embedded within the mould material with the tubular member 114 in its compressed state after moulding.

Referring now to figures 15-21, several modified versions of the fastener embodiment 110 are illustrated which incorporate different varieties of attaching members used to secure the fastener and panel assembly to a vehicle body after manufacture. In each of the fasteners shown in figures 15-21, the base, the resilient tubular member and the side lugs extending from the lateral edges of the base are the same as those shown in embodiment 110 of figures 11-14. The difference in the various embodiments is in the attaching members which extend from the side of the base opposite the tubular member embedded in the casing 14. Each of the fasteners in Figures 15-21 which is embedded within a casing 14 of the various window units shown therein may be moulded from resinous material such as the acetal resin.

In figure 15, an embodiment 130 of the fastener includes a truncated concical fastener receiving socket member 132 moulded to extend outwardly from a base 131. The socket member 132 has a cylindrical bore 133 for receiving a retaining screw 134 inserted therein from the inside of the vehicle through an opening in sheet metal S when the window unit is placed over the opening in the vehicle body. A locking washer 135 may be included between the head of the fastener 134 and the sheet metal for secure retention.

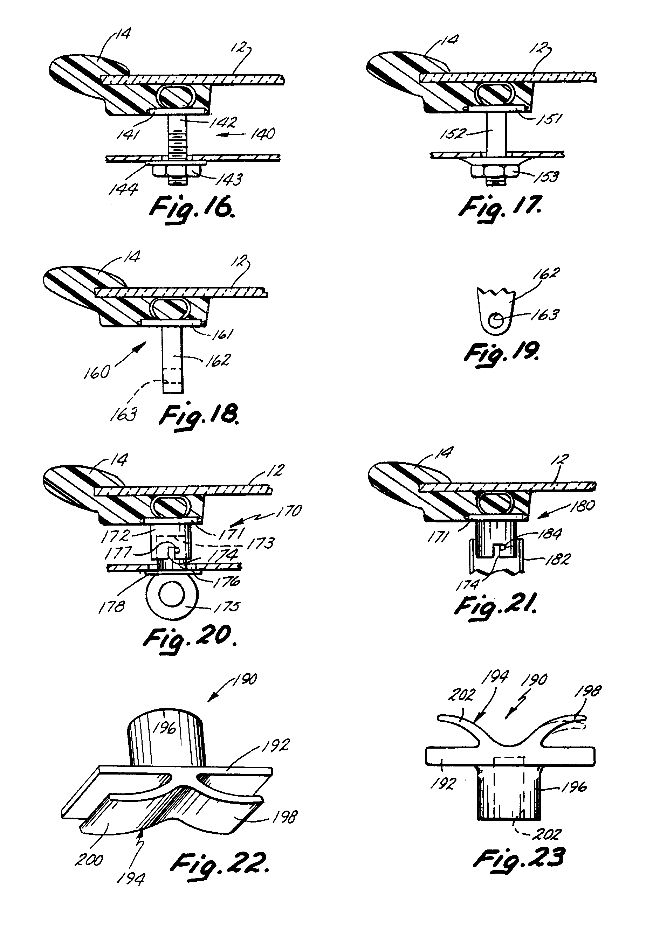

In figure 16, an embodiment 140 of the fastener includes a cylindrical, threaded post or stud 142 moulded integrally with and extending outwardly from a base 141 through an opening in the vehicle sheet metal S for receipt of a nut or other fastener 143 and a washer 144 to retain the assembly in place.

In figure 17, an embodiment 150 of the fastener includes cylindrical, smooth sided post or stud 152 extending outwardly from a base 151 through an opening in the vehicle body sheet metal S for receipt of a self-threading nut 153 or other like fastener which is secured over the cylindrical post.

With reference to figures 18 and 19, an embodiment 160 of the fasteners includes a hinge member for hingedly securing the fastener and window assembly to another member in a vehicle. Thus, a hinge flange 162 extends outwardly from a base 161 and includes an aperture 163 extending therethrough for receipt of a hinge pin or the like for pivotal securement of the fastener and window assemby to another support member.

In figure 20, an embodiment 170 of the fastener includes a cylindrical socket member 172 extending outwardly from a base 171 and including a bore 173 having a pair of oppositely located J-shaped securing slots 174 extending from the outer edges of the socket. The bore 173 receives a cylindrical sleeve 176 of an eye fastener 175. The sleeve 176 includes cylindrical lugs 177 at diametrically opposed positions for receipt in the J-slots 177 to hold the eye member in the bore 173. The eye fastener 175 is received through a washer 178 and an opening in the sheet metal S to secure the fastener and window unit in place.

In figure 21, the portion of a fastener combination 180 illustrated therein which is embedded within the casing 14 of the window unit is identical to that in the embodiment 170 and includes the cylindrical socket member 172 extending from the base 171 and having similar J-shaped slots 174 therein. In the embodiment 180, however, a larger diameter tubular sleeve 182 having internal cylindrical lugs 184 extending from diametrically opposed positions therein is received over the socket 172 with the lugs 184 fitted in the J-slots 174 to hold of the two parts together.

A further embodiment 190 of the present invention is shown in figures 22-24 and includes a rectangular, substantially planar base 192 with a combined resilient, retaining member of a gull-wing shape extending from one side of the base. A cylindrical securing or attachment socket 196 extends from the opposite side of the base. A resilient retaining member 194 includes a pair of curved, resilient, flexible flanges 198, 200 curving upwardly and outwardly away from one another from the base 192 such that the outer ends are substantially parallel to the base 192 but spaced therefrom as shown in figure 23. The flanges 198, 200 taper toward their free ends for flexibility as shown in figure 23. The cylindrical socket 196 extending from the opposite side of the base includes a cylindrical bore 202 extending therethrough and partially through the base 192.

With reference to figure 24, the resilient retaining flanges 198, 200 are offset toward one lateral edge of base 192 for alignment with the glass sheet 12d against which those flanges are pressed when the mould sections are closed as described above. When embedded within the moulded casing 14d after manufacture, a portion of the base 192 extends laterally into the casing 14d beyond the edge of the glass 12d while the socket 196 extends out of the casing toward the body sheet metal of a supporting vehicle. Before installation in a vehicle, a threaded post 204 or other securing member may be inserted into the bore 202 such that the post will extend through an opening in the sheet metal for receipt of a nut 206 or other fastener to hold the window unit against the vehicle body. Since the socket 196 is not resilient or flexible and therefore cannot hold the fastener in a pocket or slot as with the other fasteners described above, other known means for holding the fastener in the mould assembly or for adhering it lightly in a proper position may be used with the fastener 190.

Accordingly, the present invention provides numerous embodiments of a fastener uniquely designed to allow proper positioning and location within a mould assembly during manufacture of a moulded window assembly and strong, secure retention in the moulded portions of such an assembly after manufacture. The resilient means incorporated in the fastener prevent flow off mould material around the attachment members which extend from the completed moulded casings and which would otherwise be embedded and totally enclosed in a moulding material using prior known fasteners.

## Claims

1.  A fastener (20;70;110) for securing a panel assembly (10) to a support (S), the fastener being adapted to be embedded in a moulded portion (14-14d) of the panel assembly; characterised by a base (22;72;112); resilient means (24,26;74,76;114) on the base arranged to engage a rigid member (12;12a;12b) in the panel assembly to urge the base into sealing contact with a mould (60) during formation of the moulded portion of the panel assembly, and further adapted to retain the fastener in the moulded portion of the panel assembly; and attachment means (30;92;116) on the base adapted to secure the fastener and the panel assembly to the support (S).

2. A fastener as claimed in claim 1 in which the resilient means are on one side of the base (22;72;112) and the attachment means (30;92;114) are on the opposite side of the base.

3. A fastener as claimed in claim 1 or claim 2 including retaining means (28;84) on the base (22;72) and separate from the resilient means (24,26;74,76) arranged to aid retention of the fastener in the moulded portion (14) of the assembly.

4. A fastener as claimed in claim 3 in which the retaining means includes a flange (40;74,76) extending outwardly from the base (22;72), the flange having at least one portion extending parallel to but spaced from the base.

5. A fastener as claimed in claim 3 or claim 4 in which the resilient means includes a pair of flanges (24,26) spaced apart on and extending outwardly from the base (22), the retaining means (28) extending from the base at a position intermediate the flanges.

6. A fastener as claimed in claim 5 in which the base (72) includes opposite lateral edges, the retaining means (84) being offset toward one of the lateral edges and the pair of flanges (74,76) being offset toward the other of the lateral edges.

7. A fastener as claimed in any one of claims 3 to 6 in which the retaining means (40) are T-shaped.

8. A fastener as claimed in any one of claims 3 to 6 in which the retaining means (84) are gull-winged shaped.

9. A fastener as claimed in any one of the preceding claims including projecting means (46;82;126) extending from the base and arranged to locate and position the fastener in a mould when forming the panel assembly, and to aid the retention of the fastener in the moulded portion (14) of the assembly.

10. A fastener as claimed in claim 9 in which the projecting means include a plurality of pins (46) extending from edges of the base (22;72).

11. A fastener as claimed in claim 9 in which the projecting means include a plurality of elongated lugs (126) extending from edges of the base (112).

12. A fastener as claimed in any one of the preceding claims in which the resilient means include at least one resilient member extending outwardly from the base (22;72;112) and having a surface (36,38;74,76;120) spaced from the base which extends generally parallel thereto and arranged to resist removal of the fastener from the assembly.

13. A fastener as claimed in claim 12 in which the resilient member is a cantilevered flange (24,26;74,76) which curves outwardly away from the base (22,72) to a free end and tapers in thickness from the base to the free end.

14. A fastener as claimed in claim 13 having a pair of said cantilevered flanges (24,26;74,76) spaced apart on the base (22,72).

15. A fastener as claimed in any one of claims 12 to 14 in which the resilient member (74,76;114) is laterally offset towards one edge of the base (72;112).

16. A fastener as claimed in any one of the preceding claims in which the resilient member (114) is tubular, the axis of the tubular member extending generally parallel to the base (112).

17. A fastener as claimed in any one of the preceding claims in which the attachment means (30;92;116) includes a resilient securing member (50;98;119) extending outwardly from the base, the resilient member being adapted to engage an aperture in a mould assembly to retain the fastener in a desired position within the mould during formation of the moulded assembly portion.

18. A fastener as claimed in claim 17 in which the attachment means (30) includes an upstanding post (48) on the base (22), and the resilient securing member includes an arm (50) extending from the post at an angle to the base, the arm being flexible with respect to the post and having serrations (52) thereon adapted to engage a support (S).

19. A fastener as claimed in claim 17 in which the attachment means (92;116) includes an upstanding first flange (94,96;117) on the base (72;112), and the resilient securing member including a second flange (98;119) extending from the first flange at an angle to the base, the second flange being flexible with respect to the first flange and having serrations (102;121) thereon adapted to engage a support (S).

**20.** A panel assembly (10) adapted to be secured as a unit to a support (S), characterised by a panel (12) having a peripheral edge; a casing of moulded material (14) moulded around at least a portion of the peripheral edge, a fastener (20;70;110) mounted in the casing, and including a base (22;72;112), resilient means (24,26;74,76;114) on the base, embedded within the casing, and arranged to engage a rigid member (12) in the casing to urge the base into sealing contact with a mould (60) during moulding of the casing, and further to retain the fastener in the casing, and attachment means (30;92;116) on the base, exposed to the exterior of the casing, arranged to secure the fastener and the assembly to the support (S).

**21.** An assembly as claimed in claim 20 in which the base (22;72;112) has first and second opposing surfaces, the first surface facing inwardly of the casing and the second surface facing outwardly of the casing, the resilient means (24,26;74,76;114) being on the first surface and the attachment means (30;92;116) being on the second surface.

**22.** An assembly as claimed in claim 20 or claim 21 in which the said fastener comprises a fastener as claimed in any one of claims 1 to 19.

**23.** In combination with a fastener as claimed in any one of the preceding claims, a mould assembly characterised by; a pair of cooperating mould sections (60;62) having facing surfaces and defining a mould cavity (C); at least one (62) of the mould sections including support means arranged to receive and support a sheet of material (12) therein such that at least a portion of the periphery of the sheet projects into the mould cavity; the other (60) of the mould sections including means adapted to press the sheet against the support means; insertion means adapted for inserting and filling the mould cavity with a flowable moulding material to form a moulded gasket or casing (14) around the said portion of the sheet material periphery; and means adapted to hold the fastener within the cavity such that the resilient means (24,26;74,76;114) of the fastener will be moulded into said moulded gasket portion or casing during moulding.

**24.** A combination as claimed in claim 23 in which the means for holding the fastener within the cavity includes a pocket (64) in at least one (60) of the mould sections opening into the cavity (C), the said means being adapted to receive the attachment means of the fastener.

**25.** A combination as claimed in claim 24 in which the means for holding the fastener further includes a recess (66) opening into the cavity (C) and surrounding the pocket, the recess being adapted to receive the base (22;72;112) of the fastener such that the resilient means (24,26;74,76;114) engages the sheet (12) and urges the base into the recess, thereby reducing or preventing moulding material from flowing around the base into the pocket (64).

**26.** A combination as claimed in claim 25 when dependent upon claim 9 in which the projecting means (46;82;126) is arranged to aid location of the base within the recess (66).

**27.** A combination as claimed in claim 25 in which the recess (66) includes a bottom surface (67), the pocket (64) and the recess (66) being positioned within the cavity (C) such that, when a rigid member (eg. 12) is positioned within the cavity and the mould sections (60,62) are closed with the resilient means (24,26;74,76;114) engaging the rigid member, the base (22;72;112) is spaced from the rigid member a distance less than the extension of the resilient means, whereby the resilient means are compressed and the base is forced against the bottom surface (67).

**28.** A mould assembly, characterised by a pair of cooperating mould sections (60,62) having facing surfaces and defining a mould cavity (C); at least one (62) of the mould sections including support means arranged to receive and support a sheet of material (12) therein such that at least a portion of the periphery of the sheet projects into the mould cavity; the other (60) of the mould sections including means adapted to press the sheet against the support means; insertion means adapted for inserting and filling the mould cavity with a flowable moulding material to form a gasket or casing (14) around the said portion of the sheet material periphery; and a pocket (64), adapted to hold a separate part (20;70;110) within the cavity (C), such that at least a first portion of the separate part engages the sheet of material forming a rigid member (e.g. 12) within the mould cavity to hold the separate part within the cavity, and such that the said first portion of the separate part is so positioned as to be moulded into the gasket (14) or casing during moulding.

**29.** A method of moulding a gasket or casing around a peripheral portion of a sheet material characterised by providing a mould assembly having cooperating mould sections (60,62) adapted to support the sheet of material (12) therein with a mould cavity (C) into which the periphery of the sheet projects; inserting a separate part (20;70;110) into a recess (66) in one (60) of the mould sections prior to closing the mould sections such that the said part is held in the recess with a portion thereof extending into the cavity (C); closing the mould sections to engage a portion of the separate part with the sheet material (12) to urge the separate part into sealing contact with a part (67) of the recess (66); introducing into the mould cavity a flowable moulding material to form the gasket or casing (14) around the sheet periphery and to embed a first portion (24,26;74,76;114) of the separate part in the gasket or casing with a second portion thereof extending out of the gasket or casing (14) the urging of the separate part into sealing contact reducing or preventing flow of moulding material around the second portion; and then, opening the mould sections and removing the sheet material with the gasket or casing thereon.

30. A fastener as claimed in claim 9 in which the base includes a surface to sealingly engage a mould portion during formation of the panel assembly; the projecting means (46,82,126) being spaced toward the resilient means from the surface of the base.

31. An assembly as claimed in claim 20 in which the base extends around the attachment means; a second side surface of the base having portions exposed at a surface of the casing; the exposed portions of the second side surface adapted to sealingly engage a mould portion (60) during moulding of the casing to prevent the flow of moulding material around the attachment means (30,92,116).

**Revendications**

1. Attache (20; 70; 110) destinée à fixer un ensemble de panneau (10) à un support (S), l'attache étant adaptée pour être encastrée dans une portion moulée (14-14d) de l'ensemble de panneau, caractérisé par une base (22; 72; 112), des moyens élastiques (24; 26; 74; 76; 114) disposés sur la base pour mettre en contact un organe rigide (12; 12a; 12b) de l'ensemble de panneau afin de pousser la base et la mettre en contact d'étanchéité avec un moule (60) durant la formation de la portion moulée de l'ensemble de panneau, et adaptés pour maintenir l'attache dans la portion moulée de l'ensemble, et des moyens de fixation (30; 92; 116) situés sur la base, adaptés pour fixer l'attache et l'ensemble de panneau au support (S).

2. Attache selon la revendication 1 dans laquelle les moyens élastiques sont situés sur un côté de la base (22; 72; 112) et dans laquelle les moyens de fixation (30; 92; 114) sont situés sur le côté opposé de la base.

3. Attache selon la revendication 1 ou 2 comprenant des moyens de maintien (28; 84) situés sur la base (22; 72) et séparés des moyens élastiques (24; 26; 74; 76) disposés pour contribuer au maintien de l'attache dans la portion moulée (14) de l'ensemble.

4. Attache selon la revendication 3 dans laquelle les moyens de maintien comprennent un rebord (40; 74; 76) s'étendant vers l'extérieur depuis la base (22; 72), le rebord présentant au moins une portion parallèle mais espacée par rapport à la base.

5. Attache selon la revendication 3 ou 4 dans laquelle les moyens élastiques comprennent un couple de rebords (24; 26) espacés les uns des autres et s'étendant vers l'extérieur depuis la base (22), les moyens de maintien (28) s'étendant depuis la base en un point intermédiaire par rapport aux rebords.

6. Attache selon la revendication 5 dans laquelle la base (72) comprend des bords latéraux opposés, les moyens de maintien (84) étant décalés vers l'un des bords latéraux et le couple de rebords (74; 76) étant décalé vers l'autre des bords latéraux.

7. Attache selon une quelconque des revendications 3 à 6 dans laquelle les moyens de maintien (40) sont en forme de T.

8. Attache selon une quelconque des revendications 3 à 6 dans laquelle les moyens de maintien (84) sont en forme d'aile en V.

9. Attache selon une quelconque des revendications précédentes comprenant des moyens en saillie (46; 82; 126) s'étendant depuis la base et disposés pour mettre en place et positionner l'attache dans un moule lors de la formation de l'ensemble, et pour aider à maintenir l'attache dans la portion moulée (14) de l'ensemble.

**10.** Attache selon la revendication 9 dans laquelle les moyens en saillie comprennent une pluralité de tiges (46) s'étendant depuis les bords de la base (22; 72).

**11.** Attache selon la revendication 9 dans laquelle les moyens en saillie comprennent une pluralité de pattes allongées (126) s'étendant depuis les bords de la base (112).

**12.** Attache selon une quelconque des revendications précédentes dans laquelle les moyens élastiques comprennent au moins un organe élastique s'étendant vers l'extérieur depuis la base (22; 72; 112) et présentant une surface (36; 38; 74; 76; 120) distante de la base qui s'étend généralement parallèlement à celle-ci et est disposée pour résister à la séparation de l'attache de l'ensemble.

**13.** Attache selon la revendication dans 12 dans laquelle l'organe élastique est un rebord en porte à faux (24; 26; 74; 76) qui s'incurve vers l'extérieur en s'éloignant de la base (22; 72) vers une extrémité libre et devient de moins en moins épais de la base vers son extrémité libre.

**14.** Attache selon la revendication 13 présentant un couple desdits rebords en porte à faux (24; 26; 74; 76) espacés les uns des autres sur la base (22; 72).

**15.** Attache selon une quelconque des revendications 12 à 14 dans laquelle l'organe élastique (74; 76; 114) est décalé latéralement vers un bord de la base (72; 112).

**16.** Attache selon une quelconque des revendications précédentes dans laquelle l'organe élastique (114) est tubulaire, l'axe de l'organe tubulaire s'étendant généralement parallèlement à la base (112).

**17.** Attache selon une quelconque des revendications précédentes dans laquelle les moyens de fixation (30; 92; 116) comprennent un organe de fixation élastique (50; 98; 119) s'étendant vers l'extérieur depuis la base, l'organe élastique étant adapté pour être en contact dans l'ouverture de l'ensemble afin de maintenir l'attache dans la position souhaitée dans le moule durant la formation de la portion d'ensemble moulée.

**18.** Attache selon la revendication 17 dans laquelle les moyens de fixation (30) comprennent un montant vertical (48) sur la base (22) et l'organe de fixation élastique comprend un bras (50) s'étendant depuis le montant en formant un angle par rapport à la base, le bras étant flexible par rapport au montant et présentant des dents (52) adaptées pour être en contact avec le support (S).

**19.** Attache selon la revendication 17 dans laquelle les moyens de fixation (92; 116) comprennent un premier rebord vertical (94; 96; 117) sur la base (72; 112), et l'organe de fixation élastique comprenant un deuxième rebord (98; 119), s'étendant depuis le premier rebord, en formant un angle par rapport à la base, le second rebord étant flexible par rapport au premier rebord et présentant des dents (102; 121) adaptées pour être en contact avec le support (S).

**20.** Ensemble de panneau (10) adapté pour être fixé en tant qu'unité sur un support (S), caractérisé par un panneau (12) présentant un bord périphérique, une gaine en matériau moulé (14) moulée autour au moins d'une portion du bord périphérique, une attache (20; 70; 110) montée dans la gaine, et comprenant une base (22; 72; 112), des moyens élastiques (24; 26; 74; 76; 114) sur la base, encastrés dans la gaine, et disposés de façon à être en contact avec un organe rigide (12) dans la gaine pour pousser la base et l'amener en contact d'étanchéité avec le moule (60) durant le moulage de la gaine, et de façon aussi à maintenir l'attache dans la gaine, et des moyens de fixation (30; 92; 116) sur la base, tournés vers l'extérieur de la gaine, disposés pour fixer l'attache et l'ensemble sur le support (S).

**21.** Ensemble selon la revendication 20 dans lequel la base (22; 72; 112) présente des première et seconde surfaces se faisant face, la première surface étant orientée vers l'intérieur de la gaine, et la deuxième vers l'extérieur de la gaine, les moyens élastiques (24; 26; 74; 76; 114) étant situés sur la première surface et les moyens de fixation (30; 92; 116) sur la seconde.

**22.** Ensemble selon la revendication 20 ou 21 dans lequel ladite attache comprend une attache selon une quelconque des revendications 1 à 19.

**23.** En combinaison avec l'attache selon une quelconque des revendications précédentes, un ensemble de moulage caractérisé par un couple de sections de moulage coopérant (60; 62) présentant des surfaces opposées et définissant une cavité de moulage (C), au moins une (62) des sections de moulage comprenant des moyens de support disposés pour loger et supporter une feuille de matériau (12) de façon à ce qu'au moins une portion de la périphérie de la feuille fasse saillie dans la cavité de moulage, l'autre (60) section de moulage comprenant des moyens agencés pour presser la feuille contre les moyens de support, des moyens d'insertion adaptés pour introduire un matériau de moulage susceptible d'être coulé dans la cavité de moulage et la remplir de ce matériau afin de former un joint moulé ou gaine (14) autour de ladite portion de la périphérie du matériau en feuille, et des moyens adaptés pour maintenir l'attache dans la cavité, de façon que les moyens élastiques (24; 26; 74; 76; 114) de l'attache soient moulés dans ladite portion de joint ou gaine durant le moulage.

24. Combinaison selon la revendication 23 dans laquelle les moyens pour maintenir l'attache dans la cavité comprennent une poche (64) dans au moins une (60) des sections de moulage ouvrant dans la cavité (C), lesdits moyens étant adaptés pour loger les moyens de fixation de l'attache.

25. Combinaison selon la revendication 24 dans laquelle les moyens pour maintenir l'attache dans la cavité comprennent aussi un renfoncement (66) ouvrant dans la cavité (C) et entourant la poche, le renfoncement étant adapté pour loger la base (22; 72; 112) de l'attache de façon que les moyens élastiques (24; 26; 74; 76; 114) soient en contact avec la feuille (12) et poussent la base dans le renfoncement, de manière à réduire ou empêcher les risques que le matériau de moulage coule autour de la base dans la poche (64).

26. Combinaison selon la revendication 25 dépendant de la revendication 9 dans laquelle les moyens en saillie (46; 82; 126) sont disposés pour aider la mise en place de la base à l'intérieur du renfoncement (66).

27. Combinaison selon la revendication 25 dans laquelle le renfoncement (66) comprend une surface de fond (67), la poche (64) et le renfoncement (66) étant positionnés dans la cavité (C) de façon que, lorsqu'un organe rigide (par ex. 12) est positionné dans la cavité et lorsque les sections de moulage (60; 62) sont fermées, les moyens élastiques (24; 26; 74; 76; 114) étant en contact avec l'organe rigide, la base (22; 72; 112) est espacée de l'organe rigide d'une distance inférieure à celle de l'étendue des moyens élastiques, et de cette façon les moyens élastiques sont comprimés et la base est poussée contre la surface de fond (67).

28. Ensemble de moulage, caractérisé par un couple de sections de moulage coopérant (60; 62) présentant des surfaces se faisant face et définissant une cavité de moulage (C), au moins une (62) section de moulage comprenant des moyens de support disposés pour loger et supporter une feuille de matériau (12) de façon à ce qu'au moins une portion de la périphérie de la feuille fasse saillie dans la cavité de moulage, l'autre (60) section de moulage comprenant des moyens adaptés pour presser la feuille contre les moyens de support, des moyens d'insertion adaptés pour introduire dans la cavité de moulage un matériau de moulage susceptible de couler et remplir celle-ci afin de former un joint ou gaine (14) autour de ladite portion de la feuille, et une poche (64) adaptée pour maintenir une partie séparée (20; 70; 110) dans la cavité (C) de sorte qu'au moins une première portion de la partie séparée soit en contact avec la feuille de matériau formant l'organe rigide (par ex.12) dans la cavité de moulage pour maintenir la partie séparée dans la cavité, et de sorte que ladite première portion de la partie séparée soit positionnée de façon à être moulée dans le joint (14) ou gaine durant le moulage.

29. Un procédé de moulage d'un joint ou gaine autour de la portion périphérique d'un matériau en feuille caractérisé par le fait de prévoir un ensemble de moulage présentant des sections de moulage (60; 62) coopérant, adaptées pour supporter à l'intérieur le matériau en feuille (12), avec une cavité de moulage (C) dans laquelle la périphérie de la feuille fait saillie, par le fait d'introduire une partie séparée (20; 70; 110) dans un renfoncement (66) dans une (60) des sections de moulage avant la fermeture des sections de moulage de sorte que ladite partie est maintenue dans le renfoncement, une portion de celui-ci s'étendant dans la cavité (C), par le fait de fermer les sections de moulage afin de mettre en contact une portion de la partie séparée avec le matériau en feuille (12) pour pousser la partie séparée et l'amener en contact étanche avec la partie (67) du renfoncement (66), par le fait d'introduire dans la cavité de moulage un matériau de moulage susceptible de couler pour former le joint ou gaine (14) autour de la périphérie de la feuille et d'encastrer la première portion (24; 26; 74; 76; 114) de la partie séparée dans le joint ou gaine, la deuxième portion s'étendant hors du joint ou gaine (14), la poussée de la partie séparée réduisant ou empêchant les risques d'un écoulement du matériau de moulage autour de la seconde portion, puis par le fait d'ouvrir les sections de moulage et d'enlever la feuille de matériau supportant le joint ou gaine.

30. Attache selon la revendication 9 dans laquelle la base comprend une surface pour mettre en contact de façon étanche une portion de moule durant la formation de l'ensemble, les moyens en saillie (46; 82; 126) étant éloignés, vers les moyens élastiques, de la surface de la base.

31. Ensemble selon la revendication 20 dans lequel la base s'étend autour des moyens de fixation, une seconde surface latérale de la base présentant des portions exposées à la surface de la gaine, les portions exposées de la seconde surface latérale étant adaptées pour mettre en contact de façon étanche une portion de moule (60) durant le moulage de la gaine pour empêcher l'écoulement du matériau de moulage autour des moyens de fixation (30; 92; 116).

## Patentansprüche

1. Halterung (20; 70; 110) zum Befestigen eines Plattengefüges (10) an einem Träger (S), wobei die Halterung so angepaßt ist, daß sie in ein Formteil (14-14d) des Plattengefüges eingebettet werden kann, **gekennzeichnet durch** ein Fußteil (22;72;112); elastische Vorrichtungen (24,26;74,76;114) auf dem Fußteil, die so angeordnet sind, daß sie gegen ein starres Element (12;12a;12b) in dem Plattengefüge anliegen, um das Fußteil in dichtenden Kontakt gegen eine Formmasse (60) während der Bildung des Formteils des Plattengefüges zu drücken und außerdem die Halterung in dem Formteil des Plattengefüges zu halten; sowie durch eine Befestigungsvorrichtung (30;92;116) an dem Fußteil, um die Halterung und das Plattengefüge an dem Träger (S) zu befestigen.

2. Halterung nach Anspruch 1, wobei die elastischen Vorrichtungen sich auf einer Seite des Fußteiles (22;72;112) befinden und die Befestigungsvorrichtung (30;92;114) auf der entgegengesetzten Seite des Fußteiles.

3. Halterung nach Anspruch 1 oder 2, umfassend eine Rückhaltevorrichtung (28;84) an dem Fußteil (22; 72), die unabhängig von den elastischen Vorrichtungen (24,26;74,76) ist, um die Befestigung der Halterung in dem Formteil (14) des Gefüges zu unterstützen.

4. Halterung nach Anspruch 3, wobei die Rückhaltevorrichtung einen Flansch (40;74,76) umfaßt, der von dem Fußteil (22;72) aus nach außen verläuft, wobei der Flansch mindestens einen Abschnitt aufweist, der parallel, aber im Abstand zum Fußteil verläuft.

5. Halterung nach Anspruch 3 oder 4, wobei die elastischen Vorrichtungen ein Paar Flansche (24,26) umfassen, die sich im Abstand zueinander auf dem Fußteil befinden und nach außen hin von dem Fußteil (22) aus verlaufen, wobei die Rückhaltevorrichtung (28) sich von dem Fußteil aus von einer Position zwischen den Flanschen erstreckt.

6. Halterung nach Anspruch 5, wobei das Fußteil (72) einander gegenüberliegende seitliche Ränder umfaßt, und die Rückhaltevorrichtung (84) zu einem der seitlichen Ränder hin versetzt ist und das Paar Flansche (74,76) zum anderen seitlichen Rand hin versetzt ist.

7. Halterung nach einem der Ansprüche 3 bis 6, wobei die Rückhaltevorrichtung (40) die Form eines T aufweist.

8. Halterung nach einem der Ansprüche 3 bis 6, wobei die Rückhaltevorrichtung (84) die Form von Knickflügeln aufweist.

9. Halterung nach einem der vorhergehenden Ansprüche, Vorsprünge (46;82;126) umfassend, die sich von dem Fußteil aus erstrecken und so angeordnet sind, daß die Halterung in der Form beim Formen des Plattengefüges lokalisiert und positioniert werden kann, und um die Befestigung der Halterung in dem Formteil (14) des Gefüges zu unterstützen.

10. Halterung nach Anspruch 9, wobei die Vorsprünge eine Vielzahl von Stiften (46) umfassen, die sich von den Rändern des Fußteiles (22;72) aus erstrecken.

11. Halterung nach Anspruch 9, wobei die Vorsprünge eine Vielzahl von verlängerten Ansätzen (126) umfassen, die sich von den Rändern des Fußteiles (112) aus erstrecken.

12. Halterung nach einem der vorhergehenden Ansprüche, wobei die elastischen Vorrichtungen mindestens ein elastisches Element umfassen, das von dem Fußteil (22;72;112) aus nach außen verläuft und eine Oberfläche (36,38;74,76;120) aufweist, die sich im Abstand zum Fußteil befindet, welche im allgemeinen parallel dazu verläuft und so angeordnet ist, daß sie der Entfernung der Halterung aus dem Gefüge entgegenwirkt.

13. Halterung nach Anspruch 12, wobei das elastische Element ein freitragender Flansch (24,26;74,76) ist, der sich nach außen hin weg von dem Fußteil (22,72) zu einem freien Ende hin krümmt und sich in bezug auf seine Dicke von dem Flußteil zum freien Ende hin verjüngt.

14. Halterung nach Anspruch 13, ein Paar der freitragenden Flansche (24,26;74,76) im Abstand zum Fußteil umfassend.

15. Halterung nach einem der Ansprüche 12 bis 14, wobei das elastische Element (74,76;114) seitlich in Richtung eines Randes des Fußteils (72;112) versetzt ist.

16. Halterung nach einem der vorhergehenden Ansprüche, wobei das elastische Element (114) röhrenförmig ist, und die Achse des röhrenförmigen Elements im allgemeinen parallel zum Fußteil (112) verläuft.

17. Halterung nach einem der vorhergehenden Ansprüche, wobei die Befestigungsvorrichtung (30;92;116) ein elastisches Befestigungselement (50;98;119) aufweist, das von dem Fußteil nach außen verläuft, und das elastische Element geeignet ist in eine Öffnung in einem Formgefüge einzugreifen, um die Halterung an einer gewünschten Stelle in der Form während der Bildung des geformten Teils des Gefüges festzuhalten.

18. Halterung nach Anspruch 17, wobei die Befestigungsvorrichtung (30) einen aufrecht stehenden Flansch (48) auf dem Fußteil (22) umfaßt, und das elastische Befestigungselement einen Arm (50) aufweist, der sich von dem Flansch in einem Winkel zum Fußteil (22) erstreckt, und der Arm im Hinblick auf den Flansch elastisch ist und Sägezahneinschnitte (52) aufweist, um in den Träger (S) einzugreifen.

19. Halterung nach Anspruch 17, wobei die Befestigungsvorrichtung (92;116) einen aufrechten ersten Flansch (94,96;117) auf dem Fußteil (72;112) aufweist, und das elastische Befestigungselement einen zweiten Flansch (98;119) umfaßt, der von dem ersten Flansch aus in einem Winkel zum Fußteil verläuft, wobei der zweite Flansch in bezug auf den ersten Flansch elastisch ist und Sägezahneinschnitte aufweist (102;121), um in den Träger (S) einzugreifen.

20. Plattengefüge (10), geeignet, um als eine Einheit an dem Träger (S) befestigt zu werden, **gekennzeichnet durch** eine Platte (12), die einen äußeren Rand aufweist; eine Ummantelung aus Formmasse (14), die um zumindest einen Abschnitt des äußeren Randes herumgeformt ist, eine Halterung (20;70;110), die in der Ummantelung angebracht ist und ein Fußteil (22;72;112) umfaßt, elastische Vorrichtungen (24,26,74,76;114) auf dem Fußteil, die in die Ummantelung eingebettet sind und mit einem starren Element in der Ummantelung in Eingriff stehen, um das Fußteil in dichtenden Kontakt mit einer Formmasse (60) während der Formung der Ummantelung zu bringen, und außerdem die Halterung in der Ummantelung zurückzuhalten, sowie eine Befestigungsvorrichtung (30;92;116) auf dem Fußteil, die dem Äußeren der Ummantelung ausgesetzt und so angeordnet ist, daß sie die Halterung und das Gefüge an dem Träger (S) befestigt.

21. Gefüge nach Anspruch 20, wobei das Fußteil (22;72;112) eine erste und eine zweite einander entgegengesetzte Oberfläche aufweist, und die erste Oberfläche zum Inneren der Ummantelung gerichtet ist und die zweite Oberfläche nach außen gerichtet ist, wobei die elastischen Vorrichtungen (24,26;74,76;114) sich auf der ersten Oberfläche befinden und die Befestigungsvorrichtung (30;92;116) sich auf der zweiten Oberfläche befindet.

22. Ein Gefüge nach Anspruch 20 oder 21, wobei die Halterung eine Halterung nach einem der Ansprüche 1 bis 19 umfaßt.

23. Ein Formgefüge in Verbindung mit einer Halterung nach einem der vorhergehenden Ansprüche, **gekennzeichnet durch** ein Paar zusammenwirkender Formabschnitte (60;62), die einander gegenüberliegende Oberflächen aufweisen und einen Formraum (C) bilden; mindestens einen der Formabschnitte (62), der ein Halterungselement umfaßt, um eine Materialplatte (12) darin aufzunehmen und zu halten, so daß zumindest ein Abschnitt der Außenfläche der Platte in den Formraum hineinragt; und den anderen Formabschnitt (60), der eine Vorrichtung umfaßt, die dazu geeignet ist, die Platte gegen die Halterungsvorrichtung zu pressen; und eine Einführvorrichtung zum Einführen und Ausfüllen des Formraumes mit einem fließfähigen Formmaterial, um eine geformte Dichtung oder Ummantelung (14) um diesen Abschnitt der Plattenaußenfläche zu formen; sowie eine Vorrichtung, die dazu geeignet ist, die Halterung in dem Hohlraum zu halten, so daß die elastischen Vorrichtungen (24,26;74,76;114) der Halterung in den geformten Dichtungsabschnitt bzw. die Ummantelung während des Formens eingeformt werden.

24. Kombination nach Anspruch 23, wobei die Vorrichtung zum Halten der Halterung im Formraum eine Tasche (64) in mindestens einem der Formabschnitte (60) aufweist, die zum Formraum hin offen ist, wobei diese Vorrichtung geeignet ist, die Befestigungsvorrichtung der Halterung aufzunehmen.

25. Kombination nach Anspruch 24, wobei die Vorrichtung zum Halten der Halterung außerdem eine Aussparung (66) umfaßt, die zum Formraum (C) hin offen ist und die Tasche umgibt, wobei die Aussparung geeignet ist, den Fußteil (22;72;112) der Halterung aufzunehmen, so daß die elastischen Vorrichtungen (24,26;74,76;114) gegen die Platte (12) anliegen und das Fußteil in die Aussparung zwingen und damit die Formmasse reduzieren oder davon abhalten, um das Fußteil herum in die Tasche (64) zu fließen.

26. Kombination nach Anspruch 25 in Abhängigkeit von Anspruch 9, wobei die Vorsprünge (46;82;126) so angeordnet sind, daß sie die Lokalisierung des Fußteiles in der Aussparung (66) unterstützen.

27. Kombination nach Anspruch 25, wobei die Aussparung (66) eine Bodenfläche (67) umfaßt, und die Tasche (64) und die Aussparung (66) so in dem Formraum (C) angeordnet sind, daß, wenn ein starres Element (z.B. 12) in dem Formraum positioniert wird und die Formabschnitte (60,62) mit den elastischen Vorrichtungen (24,26;74,76;114) geschlossen werden, die gegen das starre Element anliegen, das Fußteil (22;72;112) sich in einem Abstand vom starren Element befindet, der kleiner ist als die Ausdehnung der elastischen Vorrichtungen, so daß die elastischen Vorrichtungen zusammengepreßt werden und das Fußteil gegen die Bodenfläche (67) gepreßt wird.

28. Formgefüge, **gekennzeichnet durch** ein Paar zusammenwirkender Formabschnitte (60,62), die einander gegenüberliegende Oberflächen aufweisen und einen Formraum (C) bilden; mindestens einen der Formabschnitte (62), der mit einem Halterungselement zum Aufnehmen und Halten einer Materialplatte (12) versehen ist, so daß zumindest ein Abschnitt der Außenfläche der Platte in den Formraum hineinragt; und den anderen Formabschnitt (60), der eine Vorrichtung umfasst, die dazu geeignet ist, die Platte gegen die Halterungsvorrichtung zu pressen; und eine Einführvorrichtung zum Einführen und Auffüllen des Formraums mit einem fließfähigen Formmaterial, um eine geformte Dichtung oder eine Ummantelung (14) um diesen Abschnitt der Plattenaußenfläche zu formen; und eine Tasche (64), um einen getrennten Teil (20;70;110) in dem Formraum (C) zu halten, so daß zumindest ein erster Abschnitt des getrennten Teils gegen die Platte, die das starre Element (z.B.12) in dem Formraum bildet, anliegt, um den getrennten Teil in dem Formraum zu halten, und so daß der erste Abschnitt des getrennten Teils so positioniert ist, daß er während des Formens in die Dichtung (14) oder Ummantelung eingeformt werden kann.

29. Verfahren zum Formen einer Dichtung oder einer Ummantelung um einen Außenflächenabschnitt eines Plattenmaterials, **dadurch gekennzeichnet, daß** ein Formgefüge vorgesehen wird, das zusammenwirkende Formabschnitte (60,62) aufweist, die dazu geeignet sind, das Plattenmaterial (12) aufzunehmen und einen Formraum (C) zu bilden, in welchen sich die Außenfläche der Platte hineinerstreckt, zu halten; daß ein getrenntes Teil (20;70;110) in eine Aussparung (66) in einem der Formabschnitte eingesetzt wird, bevor diese geschlossen werden, so daß dieser Teil in der Aussparung gehalten wird, wobei ein Abschnitt davon in den Formraum (C) hineinragt; daß die Formabschnitte geschlossen werden, um einen Abschnitt des getrennten Teils mit dem Plattenmaterial (12) in Eingriff zu bringen, und um den getrennten Teil in dichtenden Kontakt mit einem Teil (67) der Aussparung (66) zu bringen; daß ein fließfähiges Formmaterial in den Formraum eingeleitet wird, um die Dichtung oder Ummantelung (14) um die Plattenaußenfläche herum zu formen und einen ersten Abschnitt (24,26;74,76;114) des getrennten Teils in die Dichtung oder die Ummantelung einzubetten, wobei ein zweiter Abschnitt davon sich aus der Dichtung oder der Ummantelung (14) herauserstreckt, so daß der getrennte Teil in dichtenden Kontakt gebracht wird, um den Fluß von Formmaterial um den zweiten Abschnitt herum zu verringern oder zu verhindern; und daß dann die Formabschnitte geöffnet werden und das Plattenmaterial mit der Dichtung oder der Ummantelung darauf entfernt wird.

30. Halterung nach Anspruch 9, wobei das Fußteil eine Oberfläche umfaßt, die dichtend in einen Formabschnitt während der Bildung des Plattengefüges eingreift; und die Vorsprünge (46,82,126) sich im Abstand von der Oberfläche in Richtung der elastischen Vorrichtungen befinden.

31. Gefüge nach Anspruch 20, wobei sich das Fußteil um die Befestigungsvorrichtung herum erstreckt; eine zweite Seitenfläche des Fußteil vorgesehen ist, die Abschnitte umfaßt, die sich zur Oberfläche der Ummantelung hin erstrekken; und wobei die vorstehenden Abschnitte der zweiten Seitenfläche geeignet sind, gegen einen Formabschnitt (60) während des Formens der Ummantelung dichtend anzuliegen, um den Fluß von Formmaterial um die Befestigungsvorrichtung (30,92,116) herum zu verhindern.

Fig.1.

Fig.3.

Fig.2.

Fig.4.

Fig. 6.

Fig. 5.

Fig. 8.

Fig. 9.

Fig. 7.

Fig.14.

Fig.11.

Fig.12.

Fig.13.

Fig.15.

Fig.10.

**Fig. 16.**

**Fig. 17.**

**Fig. 18.**

**Fig. 19.**

**Fig. 20.**

**Fig. 21.**

**Fig. 22.**

**Fig. 23.**

**Fig. 24.**

**Fig. 25.**

**Fig. 26.**